# EUROPÄISCHE PATENTSCHRIFT

(11) **EP 1 896 709 B1**
(45) Veröffentlichungstag und Bekanntmachung des Hinweises auf die Patenterteilung: **02.04.2014**
(21) Anmeldenummer: 06755207.5
(22) Anmeldetag: 16.05.2006
(51) Int. Cl.: F02D 41/00, F02M 25/07

(54) **VERFAHREN UND VORRICHTUNG ZUR STEUERUNG EINER BRENNKRAFTMASCHINE**
METHOD AND APPARATUS FOR CONTROLLING AN INTERNAL COMBUSTION ENGINE
PROCÉDÉ ET DISPOSITIF DE COMMANDE D'UN MOTEUR A COMBUSTION INTERNE

(30) Priorität: 09.06.2005 DE 102005026503
(43) Veröffentlichungstag der Anmeldung: 12.03.2008
(73) Patentinhaber: ROBERT BOSCH GMBH, 70442 Stuttgart (DE)
(72) Erfinder: BLEILE, Thomas, 70435 Stuttgart (DE); STILLER, Christina, 70563 Stuttgart (DE); HEIBER, Friedrun, 70186 Stuttgart (DE)
(86) Internationale Anmeldenummer: PCT/EP2006/062340
(87) Internationale Veröffentlichungsnummer: WO 2006/131436

(56) Entgegenhaltungen:
- EP-A- 1 493 907
- "EGR SYSTEMS & COMPONENTS" DIESELNET TECHNOLOGY GUIDE, XX, XX, Dezember 2004 (2004-12), Seiten 1-14, XP001231795

## Beschreibung

### Stand der Technik

Die Erfindung betrifft ein Verfahren und eine Vorrichtung zur Steuerung einer Brennkraftmaschine.

Ein Verfahren und eine Vorrichtung zur Steuerung einer Brennkraftmaschine ist beispielsweise aus der DE 196 20 036 A1 bekannt. Dort dient ein erster Steller zur Beeinflussung des der Brennkraftmaschine zugeführten Frischluftmassenstroms und ein zweiter Steller zur Beeinflussung des Abgasrückführmassenstroms. Als erster Steller wird vorzugsweise eine Regelklappe verwendet, die in der Ansaugleitung stromabwärts des Verdichters angeordnet ist. Als zweier Steller dient vorzugsweise ein hochdruckseitiges Abgasrückführventil, das in der hochdruckseitigen Abgasrückführleitung angeordnet ist. Um in bestimmten Betriebszuständen eine genaue Einstellung sowohl des Frischluftmassenstroms als auch des Anteils des rückgeführten Abgases vornehmen zu können, werden sowohl das Abgasrückführventil als auch die Regelklappe geregelt betrieben. Üblicherweise erfolgt eine Regelung des Saugrohrdrucks, d.h. des Drucks vor dem Einlaß in die Brennkraftmaschine. Die Regelung des Saugrohrdrucks über das Abgasrückführventil basiert auf der Annahme, daß der Saugrohrdruck unabhängig von der Stellung der Regelklappe immer steigt, wenn das hochdruckseitige Abgasrückführventil weiter geöffnet wird. Dies ist aber nur dann richtig, wenn die Regelklappe so weit angestellt ist, daß sich ein deutliches Druckgefälle über die Regelklappe einstellt. Ab einem bestimmten Öffnungswinkel der Regelklappe kann sich dieser Effekt jedoch umkehren. Wird in diesem Falle das Abgasrückführventil geöffnet, fließt mehr Abgas über die Abgasrückführleitung und damit weniger Massenstrom über die Turbine. Aus diesem Grund fördert der Verdichter weniger und der Druck stromabwärts des Verdichters wird kleiner. Dies wiederum führt dazu, daß auch der Saugrohrdruck sinkt. Im Ergebnis bedeutet dies, daß sich der Regelsinn der Saugohrdruckregelung mittels des Abgasrückführventils abhängig vom Öffnungswinkel der Regelklappe ändern kann. Dieses Verhalten kann der Regler nicht kompensieren und damit kann auch der Sollwert nicht eingeregelt werden. Um diese Probleme zu beseitigen schlägt die nicht vorveröffentlichte DE 10 2004 035 316.6 ein Verfahren zur Steuerung einer Brennkraftmaschine vor mit einem ersten Steller zur Beeinflussung des der Brennkraftmaschine zugeführten Frischluftmassenstroms, mit einem zweiten Steller zur Beeinflussung des Abgasrückführmassenstroms, wobei ausgehend von einem Vergleich zwischen einem ersten Sollwert und einem ersten Istwert für den Frischluftmassenstrom eine erste Stellgröße für den ersten Steller vorgebbar ist, und wobei ausgehend von einem Vergleich zwischen einem zweiten Sollwert und einem zweiten Istwert für den Abgasmassenstrom eine zweite Stellgröße für den zweiten Steller vorgebbar ist. Sowohl der ersten Stellgröße als auch der zweiten Stellgröße werden jeweils Vorsteuerwerte überlagert, die mittels eines Modells vorgebbar sind. Durch dieses Verfahren kann vermieden werden, daß sich eine Umkehrung des Regelsinns einstellt. Das Abgasrückführventil weist unabhängig von der Position der Regelklappe den gleichen Regelsinn auf. Ferner ergibt sich eine wesentliche Vereinfachung der Applikation, da bisher die Abgasrückführrate über den Umweg Saugrohrdruck appliziert werden mußte. Bei diesem Verfahren kann die Abgasrückführrate direkt als Sollwert vorgegeben werden. Durch die Vorsteuerung, die auf einer Abbildung der Regelstrecke basiert, wird eine schnelle Einstellung der Sollwerte erreicht.

Zusätzlich zu einer hochdruckseitigen Abgasrückführung wird nun in einigen Anwendungsbereichen eine niederdruckseitige Abgasrückführung erwünscht. Hierbei wird Abgas nach einer Turbine entnommen und vor dem Verdichter eingespeist. Hierzu ist eine Niederdruck-Abgasrückführleitung vorgesehen. Um nun die Menge des rückgeführten Abgases über die Niederdruckleitung beeinflussen zu können, ist ein Niederdruck-Abgasrückführventil vorgesehen. Darüber hinaus können auch weitere Steller, wie z.B. eine Abgasklappe und/oder eine Regelklappe vor der Einspeisung der niederdruckseitigen Abgasrückführung vorgesehen sein. Bei einem solchen System besteht nun das Problem, mehrere Sollwerte gleichzeitig einzuregeln, d.h. gewünschten Istwerten anzugleichen. Es müssen nämlich simultan der Sollwert für die Hochdruck-Abgasrückführrate, der Sollwert für die Niederdruck-Abgasrückführrate und der Sollwert für den Frischluftmassenstrom eingeregelt werden.

In "EGR Systems & Components" Dieselnet Technology Guide, Dezember 2004 wird ein System bestehend aus einer hochdruckseitigen und einer niederdruckseitigen Abgasrückführung beschrieben. Es wird ein Verfahren offenbart, bei dem ein Istwert mit einem Sollwert verglichen wird und auf die Differenz dieser beiden Werte geregelt wird.

Bei bestimmten physikalischen Randbedingungen, z.B. bei einem Stelleranschlag, ist es erforderlich, Prioritäten zwischen den einzelnen Sollwerten zu setzen, da nicht mehr alle nötigen Freiheitsgrade der Regelung existieren. Wenn z.B. das hochdruckseitige Abgasrückführventil einen offenen Anschlag erreicht hat, können nicht mehr alle drei Sollwerte gleichzeitig eingestellt werden. Mit konventionellen Regelstrategien ist dies entweder gar nicht oder nur mit erheblichem applikativem Aufwand möglich, wobei sich insbesondere in dynamischen Bereichen Probleme ergeben. Probleme existieren auch in hochdynamischen Bereichen, da sich hier die einzelnen Steller unkoordiniert bewegen können. Hierdurch wird die Regelgüte herabgesetzt und im schlechtesten Falle können die Sollwerte nicht eingestellt werden.

Um diese Probleme zu beseitigen ist vorgesehen, dass der ersten Stellgröße ein erster modellbasierter Vorsteuerwert überlagert wird, der zweiten Stellgröße ein zweiter modellbasierter Vorsteuerwert überlagert wird und der dritten Stellgröße ein dritter modellbasierter Vorsteuerwert überlagert wird. Die modellbasierten Vorsteuerwerte werden durch ein Modell bestimmt, welches einen Sollwert des Frischluftmassenstroms auf einen Stellgrößen-Sollwert des ersten Stellers abbildet und/oder einen Sollwert des hochdruckseitigen Abgasmassenstroms auf einen Stellgrößen-Sollwert für den zweiten Steller abbildet und/oder einen Sollwert des niederdruckseitigen Abgasmassenstroms auf einen Stellgrößen-Sollwert für den dritten Steller abbildet. Jede dieser Abbildungen stellt gewissermaßen eine Invertierung der jeweiligen Regelstrecke vor.

Durch das Modell ist eine Modellierung wenigstens des Mischstellenvolumens V22 und des Volumens V21 vor dem Steller möglich.

Die Ist-Werte können mit Hilfe eines zweiten Modells gewonnen werden, mit dessen Hilfe die vorhandenen Sensorsignale um Störeffekte bereinigt, nicht messbare Signale berechnet und weitere kostenintensive Sensoren vermieden werden können.

### Zeichnung

Weitere Vorteile und Merkmale der Erfindung werden nachfolgend anhand von Ausführungsbeispielen in Verbindung mit der Zeichnung näher erläutert. In der Zeichnung zeigen:

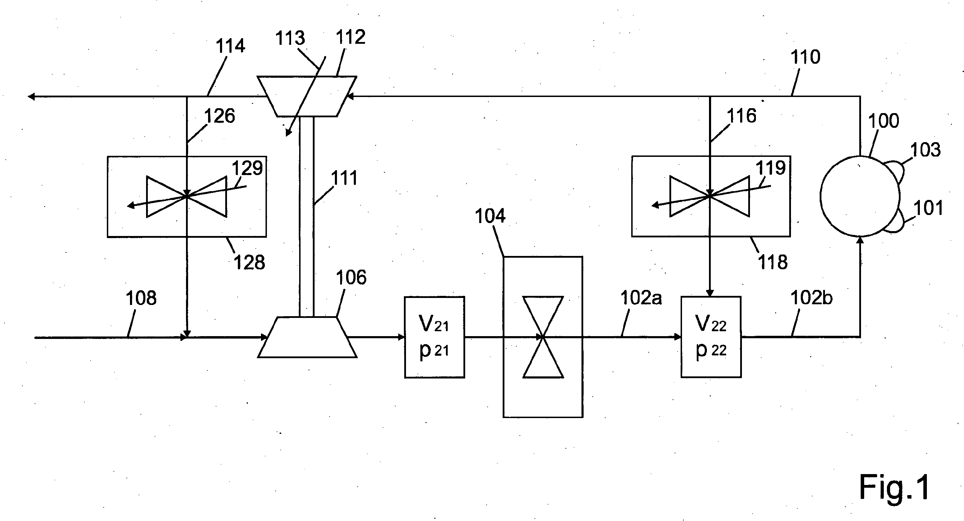

Fig. 1 schematisch ein Blockdiagramm einer Brennkraftmaschine und
Fig. 2 ein Blockdiagramm der erfindungsgemäßen Vorgehensweise.

### Beschreibung der Ausführungsbeispiele

Nachfolgend wird das erfindungsgemäße Verfahren am Beispiel einer Regelklappe, eines hochdruckseitigen Abgasrückführventils und eines niederdruckseitigen Abgasrückführventils beschrieben. Prinzipiell ist die erfindungsgemäße Vorgehensweise auf alle Steller anwendbar, mit denen ein Gasmassenstrom beeinflußt wird, z.B. der Frischluftmassenstrom, der hochdruckseitige Abgasmassenstrom bzw. der niederdruckseitige Abgasmassenstrom beeinflußt werden können. Es versteht sich, daß anstelle des Frischluftmassenstroms bzw. des hochdruckseitigen und niederdruckseitigen Abgasmassenstroms auch andere Größen, die diesen Größen entsprechen, geregelt und/oder gesteuert werden können. Bei den nachfolgend so beschriebenen Istwerten und Sollwerten dieser Größen handelt es sich demnach um Größen, die den Frischluftmassenstrom, den hochdruckseitigen Abgasrückführmassenstrom und den niederdruckseitigen Abgasrückführmassenstrom charakterisieren. Als Stellgrößen werden geeignete Größen zur Ansteuerung der entsprechenden Steller verstanden.

Einer Brennkraftmaschine 100 wird über eine Hochdruckfrischluftleitung 102 eine bestimmte Gasmenge, die einen bestimmten Sauerstoffanteil enthält, zugeführt. Die Hochdruckfrischluftleitung 102 weist zwei Teile auf. Ein erster Teil 102a führt bis zu einer Stelle, in der die Abgaszumischung erfolgt. Ein zweier Teil 102b führt bis zu einer Stelle, nach der die Abgasmischung erfolgt ist. In dem ersten Teil 102a ist eine Regelklappe 104 angeordnet.

Über eine Niederdruckfrischluftleitung 108 gelangt Umgebungsluft zu einem Verdichter 106 und strömt dann über die Regelklappe 104 in die Hochdruckfrischluftleitung 102. Über den Verdichter 106 strömt eine Luftmenge über die Regelklappe 104 in die Hochdruckfrischluftleitung 102. Zwischen dem Verdichter 106 und der Regelklappe liegt das Volumen V21, in dem der Druck P21 herrscht. An der Mischstelle herrscht der Druck P22 im Volumen V22.

Von der Brennkraftmaschine 100 strömt eine Luftmenge mit einem entsprechenden Sauerstoffanteil in eine Hochdruckabgasleitung 110. Die Hochdruckabgasleitung weist eine Verzweigung auf, die zum einen in ein hochdruckseitiges Abgasrückventil 118 führt, zum anderen hin zu einer Turbine 112. Von der Turbine 112 gelangt das Abgas in eine Niederdruckabgasleitung 114, die auch als Auspuffleitung bezeichnet wird. Die Turbine 112 treibt über eine Welle 111 den Verdichter 106 an. Mittels eines Laderstellers 113 kann die Charakteristik der Turbine 112 und damit des gesamten Laders beeinflußt werden. Zur Ansteuerung wird der Ladersteller 113 mit einem Ansteuersignal beaufschlagt, das eine Verstellung des Laders um einen Hub zur Folge hat. Der Hub wird auch als Laderhub und das Ansteuersignal als Laderstellgröße bezeichnet.

Zwischen der Hochdruckabgasleitung 110 und der Hochdruckfrischluftleitung 102 existiert eine Verbindung, die als hochdruckseitige Abgasrückführleitung 116 bezeichnet wird. Durch diese hochdruckseitige Abgasrückführleitung 116 strömt eine Abgasmenge. Der Querschnitt der hochdruckseitigen Abgasrückführleitung 116 ist vorzugsweise mittels des hochdruckseitigen Abgasrückführventils 118 steuerbar. Zur Ansteuerung wird ein Abgasrückführsteller 119 mit einem Ansteuersignal beaufschlagt, das eine Verstellung des Abgasrückführventils 118 um einen Hub zur Folge hat. Der Hub wird auch als Abgasrückführventilhub und das Ansteuersignal als Abgasrückführventilstellgröße bezeichnet.

Zwischen der niederdruckseitigen Abgasleitung 114 und der niederdruckseitigen Frischluftleitung 108 existiert ebenfalls eine Verbindung, die als niederdruckseitige Abgasrückführleitung 126 bezeichnet wird. Durch diese niederdruckseitige Abgasrückführleitung 126 strömt eine Gasmenge. Der Querschnitt der niederdruckseitigen Abgasrückführleitung 126 ist vorzugsweise mittels eines niederdruckseitigen Abgasrückführventils 128 steuerbar. Zur Ansteuerung wird ein niederdruckseitiger Abgasrückführsteller 129 mit einem Ansteuersignal beaufschlagt, das eine Verstellung des Abgasrückventils 128 um einen Hub zur Folge hat. Der Hub wird auch als niederdruckseitiger Abgasrückführventilhub und die Ansteuergröße als niederdruckseitiges Abgasrückführventilstellgröße bezeichnet. Darüber hinaus werden auch die Drehzahl an der Kurbel- und/oder der Nockenwelle der Brennkraftmaschine mittels eines Drehzahlsensors 101 erfaßt. Des weiteren sind Mengenstellglieder 103 vorgesehen, welche die einzuspritzende Kraftstoffmenge, die der Brennkraftmaschine zugeführt wird, bestimmen. Die Stellglieder 103 werden mit einem Mengensignal beaufschlagt.

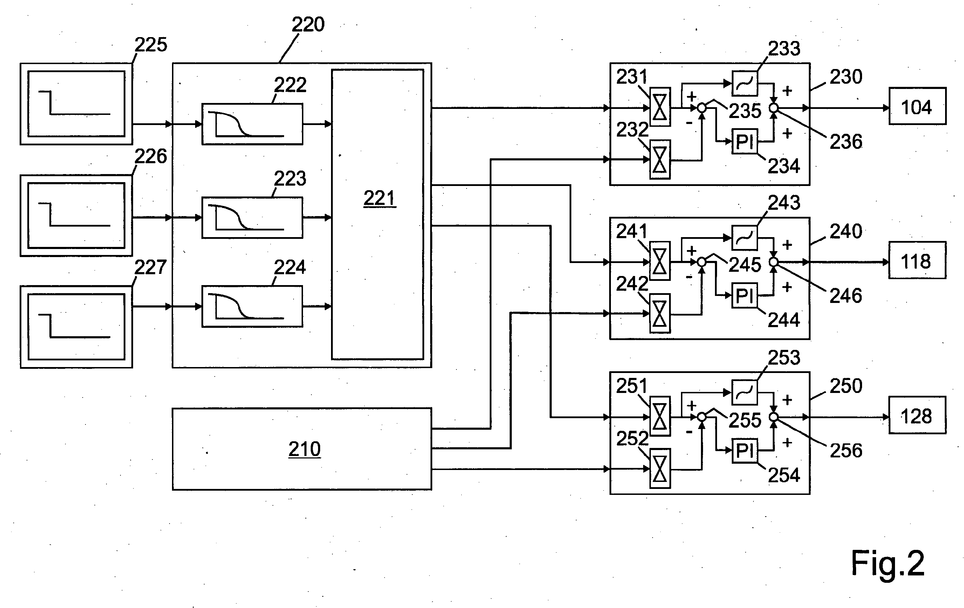

In Fig. 2 ist schematisch die erfindungsgemäße Vorgehensweise anhand eines Blockdiagramms dargestellt.

Eine Istwertermittlung 210 ermittelt ausgehend von nicht dargestellten Eingangsgrößen jeweils einen Istwert für den Frischluftmassenstrom, einen Istwert für den niederdruckseitigen Abgasrückführmassenstrom sowie einen Istwert für den hochdruckseitigen Abgasrückführmassenstrom. Die Istwertermittlung wird bevorzugt durch ein Modell realisiert. Eine Modellberechnung beispielsweise zur Istwertermittlung des Frischluftmassenstroms ist aus der DE 199 63 358 A1 bekannt, die zum Zwecke der Offenbarung in die vorliegende Anmeldung einbezogen wird. In entsprechender Weise werden auch die Istwerte für den niederdruckseitigen und den hochdruckseitigen Abgasrückführmassenstrom modelliert. Die Istwertermittlung 210 kann insoweit mehrere Teilmodelle umfassen. Die Ausgangssignale der Istwertermittlung gelangen jeweils an nachfolgend noch näher zu beschreibende Regler 230, 240, 250. Mit dem Ausgangssignal der Regler 230, 240, 250 werden wiederum die Regelklappe 104, der Steller 119 des hochdruckseitigen Abgasrückführventisl 118 sowie der Steller 129 des niederdruckseitigen Abgasrückführventils 129 beaufschlagt.

In einem als Ganzes mit 220 bezeichneten Modell werden aus Eingangsgrößen des Frischluftmassenstroms 225, des niederdruckseitigen Abgasrückführmassenstroms 226 sowie des hochdruckseitigen Abgasrückführmassenstroms 227 Sollwerte der jeweiligen Steller, d.h. der Regelklappe, des Stellers 129 des niederdruckseitigen Abgasrückführventils 128 sowie des Stellers 119 des hochdruckseitigen Abgasrückführventils 118 berechnet. Das Modell 220, das auch als inverses Modell der Regelstrecke bezeichnet werden kann, umfaßt hierzu Recheneinrichtungen 222, 223, 224, welche Stellgrößenbegrenzungen, Dynamikbegrenzungen und weitere durch das System bedingte Begrenzungen und dergleichen der Eingangsgrößen 225, 226, 227 vornehmen. Wenn beispielsweise die Frischluftmasse einen Sprung aufweist, wird dieser Sprung in der Recheneinrichtung 222 "verschliffen". Entsprechendes geschieht mit Sprüngen des niederdruckseitigen sowie des hochdruckseitigen Abgasrückführmassenstroms in den entsprechend dargestellten Recheneinrichtungen 223 und 224. Auch diese werden dynamisch adaptiert. In dem inversen Modell 221, welches jeweils aus Teilmodellen des Volumens V22 und des Volumens V21 gebildet werden kann, werden dann Sollwerte für die Gasmassenströme an den Stellern, d.h. der Regelklappe, des Stellers 129 des niederdruckseitigen Abgasrückführventils 128 sowie des Stellers 119 des hochdruckseitigen Abgasrückführventils 118 bestimmt und ebenfalls den Recheneinrichtungen 230, 240, 250 zugeführt.

Jede dieser Recheneinrichtungen 230, 240, 250 weist den gleichen Aufbau auf, so daß nachfolgend die Funktion dieser Recheneinrichtungen 230, 240, 250 exemplarisch anhand der Recheneinrichtung 230 zur Bestimmung der Regelklappe 104 erläutert wird. Das Modell 220 oder das entsprechende Teilmodell liefert Sollmassenströme an die jeweiligen Regler. Diese werden über ein weiteres Modell, das die Steller als Drosseln abbildet, in effektiv durchströmte Flächen umgesetzt und mittels der jeweiligen Kennlinien dann in einen Stellerhub. Diese Vorsteuerung weist den Vorteil auf, daß sehr schnell auf Änderungen des Sollwerts reagiert werden kann, so daß sich ein sehr schnelles Führungsverhalten ergibt. Hierbei wird die Systemdynamik bereits berücksichtigt. Dies bedeutet, daß durch das Modell 220 und die Umsetzung in einem Stellerhub sowohl die hochdruckseitige Abgasrückführrate oder der hochdruckseitige Abgasrückführmassenstrom, der niederdruckseitige Abgasrückführmassenstrom oder die niederdruckseitige Abgasrückführrate und der Luftmassenstrom sehr schnell an sich ändernde Sollwerte angepaßt werden. Dies ist insbesondere bei der Umschaltung zwischen verschiedenen Betriebszuständen wie beispielsweise der Umschaltung in den Regenerationsbetrieb oder aus dem Regenerationsbetrieb heraus vorteilhaft, z.B. für NOx-Speicherkat, Partikelfilter-Regeneration, teilhomogener Betrieb).

Der Regler 230 umfaßt zwei Recheneinheiten 231, 232. Die erste Recheneinheit 231 ist dem Sollwert des Massenstroms aus der Vorsteuerung 220 zugeordnet. Die zweite Recheneinheit 232 ist dem Istwert des Frischluftmassenstroms, der durch das Modell 210 bestimmt wird, zugeordnet. Diese Recheneinrichtungen stellen im Grunde inverse Drosseln dar, da sowohl die Regelklappe 104 als auch die Abgasrückführventile 118, 128 in der Strömung jeweils als Drosseln wirken. Aus dem Ausgangssignal der Recheneinrichtung 231, d.h. aus dem durch die Vorsteuerung 220 ermittelten Sollwert für den Massenstrom und dem inversen Drosselmodell wird die effektive Fläche der Drossel gewonnen. Diese wird dann mit Hilfe der Kennlinie 233 in das Vorsteuersignal der Regelklappe umgesetzt.

Gleichzeitig wird nach der Recheneinrichtung 232 der Istwert der effektiven Fläche von dem Ausgangswert der Recheneinrichtung 231 an einem Verknüpfungspunkt 235 subtrahiert und einem PI-Regler 234 zugeführt. Der PI-Regler 234 gleicht die Ist-Fläche der Sollfläche an, damit entspricht auch der Sollwert des Luftmassenstroms dem Istluftmassenstrom. Dazu wird der Istwert, der durch das Modell 210 bereitgestellt wird, mit dem gefilterten Sollwert verglichen. Ausgehend von der Abweichung des Sollwerts vom Istwert wird dann die Stellgröße zur Beaufschlagung der Regelklappe 104 vom Regler 234 vorgegeben. Dieser Regelung ist dabei die Vorsteuerung, die durch das Modell 220, die Recheneinrichtung 231 und die Kennlinie 233 gebildet wird, überlagert. Das Modell der Vorsteuerung gibt - wie bereits erläutert - ausgehend von dem Sollwert für die Frischluftmasse eine Stellgröße für die Regelklappe 104 vor. Das inverse Modell 221 der Vorsteuerung 220 beinhaltet hierzu ein Teilmodell, welches eine Modellierung des Mischstellenvolumens V22 und des Volumens V21 vor dem Steller, der Regelklappe 104, nachbildet.

## Patentansprüche

1. Verfahren zur Steuerung einer Brennkraftmaschine mit einem ersten Steller (104) zur Beeinflussung des der Brennkraftmaschine zugeführten Gasluftmassenstroms, mit einem zweiten Steller (118) zur Beeinflussung des hochdruckseitigen Abgasrückführmassenstroms und mit wenigstens einem dritten Steller (128) zur Beeinflussung des niederdruckseitigen Abgasrückführmassenstroms, wobei ausgehend von einem Vergleich zwischen einem ersten Sollwert und einem ersten Istwert für den Frischluftmassenstrom eine erste Stellgröße für den ersten Steller (104) vorgegeben ist, ausgehend von einem Vergleich zwischen einem zweiten Sollwert und einem zweiten Istwert für den hochdruckseitigen Abgasmassenstrom eine zweite Stellgröße für den zweiten Steller (118) vorgegeben ist und wobei ausgehend von einem Vergleich zwischen einem dritten Sollwert und einem dritten Istwert für den niederdruckseitigen Abgasmassenstrom wenigstens eine dritte Stellgröße für den wenigstens einen dritten Steller (128) vorgegeben ist, **dadurch gekennzeichnet, dass** der dritten Stellgröße ein dritter modellbasierter Vorsteuerwert überlagert wird.

2. Verfahren nach Anspruch 1, **dadurch gekennzeichnet, dass** der ersten Stellgröβe ein erster modellbasierter Vorsteuerwert überlagert wird.

3. Verfahren nach Anspruch 1, **dadurch gekennzeichnet, dass** der zweiten Stellgröße ein zweiter modellbasierter Vorsteuerwert überlagert wird.

4. Verfahren nach Anspruch 1, 2 oder 3, **gekennzeichnet durch** ein Modell (221), welches einen Sollwert des Frischluftmassenstroms auf einen Sollwert des ersten Stellers (104) abbildet und/oder einen Sollwert des hochdruckseitigen Abgasmassenstroms auf einen Sollwert für den zweiten Steller (118) abbildet und/oder einen Sollwert des niederdruckseitigen Abgasmassenstroms auf einen Sollwert für den dritten Steller (128) abbildet.

5. Verfahren nach Anspruch 4, **dadurch gekennzeichnet, dass** durch das Modell eine Modellierung wenigstens des Mischstellenvolumens V22 und des Volumens V21 vor dem ersten Steller (104) erfolgt.

6. Verfahren nach einem der vorstehenden Ansprüche, **dadurch gekennzeichnet, dass** die Istwerte mittels eines weiteren Modells (210) vorgebbar sind.

7. Verfahren nach einem der vorstehenden Ansprüche, **dadurch gekennzeichnet, dass** der Istwert für den Frischluftmassenstrom an den Sollwert für den Frischluftmassenstrom und/oder der Istwert für den hochdruckseitigen Abgasrückführmassenstrom an den Sollwert für den hochdruckseitigen Abgasrückführmassenstrom und/oder der Istwert für den niederdruckseitigen Abgasrückführmassenstrom an den niederdruckseitigen Sollwert für den Abgasrückführmassenstrom durch jeweils einen Regler (230; 240; 250) angeglichen werden.

8. Verfahren nach Anspruch 7, **dadurch gekennzeichnet, dass** der Regler einen PI-Regler mit modellbasierter Vorsteuerung und Flächenschätzung umfasst.

9. Vorrichtung zur Steuerung einer Brennkraftmaschine (100) mit einem ersten Steller (104) zur Beeinflussung des der Brennkraftmaschine (100) zugeführten Gasmassenstroms, mit einem zweiten Steller (118) zur Beeinflussung des hochdruckseitigen Abgasrückführmassenstroms, mit wenigstens einem dritten Steller (128) zur Beeinflussung des niederdruckseitigen Abgasrückführmassenstroms, mit Mitteln, die ausgehend von einem Vergleich zwischen einem ersten Sollwert und einem ersten Istwert für den Frischluftmassenstrom eine erste Stellgröße für den ersten Steller (104) vorgeben, die ausgehend von einem Vergleich zwischen einem zweiten Sollwert und einem zweiten Istwert für den hochdruckseitigen Abgasmassenstrom eine zweite Stellgröße für den zweiten Steller (118) vorgeben und die ausgehend von einem Vergleich zwischen einem dritten Sollwert und einem dritten Istwert für den niederdruckseitigen Abgasmassenstrom wenigstens eine dritte Stellgröße für den wenigstens einen dritten Steller (128) vorgeben, **dadurch gekennzeichnet, dass** der dritten Stellgröße ein dritter modellbasierter Vorsteuerwert überlagert wird.

## Claims

1. Method for controlling an internal combustion engine having a first actuator (104) for influencing the gas/air mass flow which is fed to the internal combustion engine, having a second actuator (118) for influencing the high-pressure-side exhaust gas recirculation mass flow and having at least a third actuator (128) for influencing the low-pressure-side exhaust gas recirculation mass flow, wherein a first actuation variable for the first actuator (104) is predefined on the basis of a comparison between a first setpoint value and a first actual value for the fresh air mass flow, a second actuation variable for the second actuator (118) is predefined on the basis of a comparison between a second setpoint value and a second actual value for the high-pressure-side exhaust gas mass flow, and wherein at least a third actuation variable for the at least one third actuator (128) is predefined on the basis of a comparison between a third setpoint value and a third actual value for the low-pressure-side exhaust gas mass flow, **characterized in that** a third model-based pilot control value is superposed on the third actuation variable.

2. Method according to Claim 1, **characterized in that** a first model-based pilot control value is superposed on the first actuation variable.

3. Method according to Claim 1, **characterized in that** a second model-based pilot control value is superposed on the second actuation variable.

4. Method according to Claim 1, 2 or 3, **characterized by** a model (221) which maps a setpoint value of the fresh air mass flow onto a setpoint value of the first actuator (104) and/or maps a setpoint value of the high-pressure-side exhaust gas mass flow onto a setpoint value for the second actuator (118) and/or maps a setpoint value of the low-pressure-side exhaust gas mass flow onto a setpoint value for the third actuator (128).

5. Method according to Claim 4, **characterized in that** modelling at least of the mixing point volume V22 and of the volume V21 before the first actuator (104) is carried out by the model.

6. Method according to one of the preceding claims, **characterized in that** the actual values can be predefined by means of a further model (210).

7. Method according to one of the preceding claims, **characterized in that** the actual value for the fresh air mass flow is approximated to the setpoint value for the fresh air mass flow and/or the actual value for the high-pressure-side exhaust gas recirculation mass flow is approximated to the setpoint value for the high-pressure-side exhaust gas recirculation mass flow and/or the actual value for the low-pressure-side exhaust gas recirculation mass flow is approximated to the low-pressure-side setpoint value for the exhaust gas recirculation mass flow by one controller (230; 240; 250) in each case.

8. Method according to Claim 7, **characterized in that** the controller comprises a PI controller with model-based pilot control and surface estimation.

9. Apparatus for controlling an internal combustion engine (100) having a first actuator (104) for influencing the gas mass flow which is fed to the internal combustion engine (100), having a second actuator (118) for influencing the high-pressure-side exhaust gas recirculation mass flow, having at least a third actuator (128) for influencing the low-pressure-side exhaust gas recirculation mass flow, having means which predefine a first actuation variable for the first actuator (104) on the basis of a comparison between a first setpoint value and a first actual value for the fresh air mass flow, which predefine a second actuation variable for the second actuator (118) on the basis of a comparison between a second setpoint value and a second actual value for the high-pressure-side exhaust gas mass flow, and which predefine at least a third actuation variable for the at least one third actuator (128) on the basis of a comparison between a third setpoint value and a third actual value for the low-pressure-side exhaust gas mass flow, **characterized in that** a third model-based pilot control value is superposed on the third actuation variable.

## Revendications

1. Procédé de commande d'un moteur à combustion interne qui présente
un premier organe de réglage (104) qui agit sur l'écoulement massique d'air gazeux apporté au moteur à combustion interne,
un deuxième dispositif de réglage (118) qui agit sur l'écoulement massique de recirculation de gaz d'échappement du côté haute pression et
au moins un troisième dispositif de réglage (128) qui agit sur l'écoulement massique de recirculation de gaz d'échappement du côté basse pression,
une première grandeur de réglage du premier dispositif de réglage (104) étant définie sur la base de la comparaison entre une première valeur de consigne et une première valeur effective de l'écoulement massique d'air frais,
une deuxième grandeur de réglage pour le deuxième dispositif de réglage (118) étant définie sur la base de la comparaison entre une deuxième valeur de consigne et une deuxième valeur effective de l'écoulement massique de gaz d'échappement côté haute pression et
au moins une troisième grandeur de réglage étant définie pour le ou les troisièmes dispositifs de réglage (128) sur la base de la comparaison entre une troisième valeur de consigne et une troisième valeur effective de l'écoulement massique de gaz d'échappement côté basse pression,
**caractérisé en ce que**
une troisième valeur de pré-commande basée sur un modèle est superposée à la troisième grandeur de réglage.

2. Procédé selon la revendication 1, **caractérisé en ce qu'**une première valeur de pré-commande basée sur un modèle est superposée à la première grandeur de réglage.

3. Procédé selon la revendication 1, **caractérisé en ce qu'**une deuxième valeur de pré-commande basée sur un modèle est superposée à la deuxième grandeur de réglage.

4. Procédé selon les revendications 1, 2 ou 3, **caractérisé par** un modèle (221) qui transforme
une valeur de consigne de l'écoulement massique d'air frais en une valeur de consigne du premier dispositif de réglage (104),
une valeur de consigne de l'écoulement massique du gaz d'échappement du côté haute pression en une valeur de consigne du deuxième dispositif de réglage (118) et/ou une valeur de consigne de l'écoulement massique de gaz d'échappement côté basse pression en une valeur de consigne du troisième dispositif de réglage (128).

5. Procédé selon la revendication 4, **caractérisé en ce que** le modèle effectue une modélisation d'au moins le volume V22 de l'emplacement de mélange et du volume V21 en amont du premier dispositif de réglage (104).

6. Procédé selon l'une des revendications précédentes, **caractérisé en ce que** les valeurs effectives sont prédéterminées au moyen d'un autre modèle (210).

7. Procédé selon l'une des revendications précédentes, **caractérisé en ce que** la valeur effective de l'écoulement massique d'air frais est comparée à la valeur de consigne de l'écoulement massique d'air frais, **en ce que** la valeur de consigne de l'écoulement massique de recirculation de gaz d'échappement côté haute pression est comparée à la valeur de consigne de l'écoulement massique de recirculation de gaz d'échappement côté haute pression et/ou **en ce que** la valeur effective de l'écoulement massique de recirculation de gaz d'échappement côté basse pression est comparée à la valeur de consigne côté basse pression de l'écoulement massique de recirculation de gaz d'échappement, chaque fois par un régulateur (230; 240; 250).

8. Procédé selon la revendication 7, **caractérisé en ce que** le régulateur comporte un régulateur PI doté d'une pré-commande basée sur modèle et d'une estimation de surface.

9. Dispositif de commande d'un moteur à combustion interne (100) qui présente
un premier organe de réglage (104) qui agit sur l'écoulement massique d'air gazeux apporté au moteur à combustion interne (100),
un deuxième dispositif de réglage (118) qui agit sur l'écoulement massique de recirculation de gaz d'échappement du côté haute pression et
au moins un troisième dispositif de réglage (128) qui agit sur l'écoulement massique de recirculation de gaz d'échappement du côté basse pression,
des moyens qui définissent une première grandeur de réglage du premier dispositif de réglage (104) sur la base de la comparaison entre une première valeur de consigne et une première valeur effective de l'écoulement massique d'air frais,
des moyens qui définissent une deuxième grandeur de réglage pour le deuxième dispositif de réglage (118) sur la base de la comparaison entre une deuxième valeur de consigne et une deuxième valeur effective de l'écoulement massique de gaz d'échappement côté haute pression et
des moyens qui définissent au moins une troisième grandeur de réglage pour le ou les troisièmes dispositifs de réglage (128) sur la base de la comparaison entre une troisième valeur de consigne et une troisième valeur effective de l'écoulement massique de gaz d'échappement côté basse pression,
**caractérisé en ce que**
une troisième valeur de pré-commande basée sur un modèle est superposée à la troisième grandeur de réglage.
